# EUROPÄISCHE PATENTSCHRIFT

(11) **EP 1 385 785 B1**
(45) Veröffentlichungstag und Bekanntmachung des Hinweises auf die Patenterteilung: **15.09.2004**
(21) Anmeldenummer: 02716779.0
(22) Anmeldetag: 15.02.2002
(51) Int. Cl.: C01C 1/04, B01J 8/04

(54) **VERFAHREN ZUM KATALYTISCHEN ERZEUGEN VON AMMONIAK AUS SYNTHESEGAS**
METHOD FOR THE CATALYTIC PRODUCTION OF AMMONIA FROM SYNTHESIS GAS
PROCEDE DE PRODUCTION CATALYTIQUE D'AMMONIAC A PARTIR DE GAZ DE SYNTHESE

(30) Priorität: 31.03.2001 DE 10116150
(43) Veröffentlichungstag der Anmeldung: 04.02.2004
(73) Patentinhaber: MG Technologies AG, 60325 Frankfurt am Main (DE); Ungar, Gert, 60598 Frankfurt am Main (DE); Ungar, Jürg Dieter, 60598 Frankfurt am Main (DE); Ungar, Sybille, 83052 Bruckmuhl (DE)
(72) Erfinder: UNGAR, Gert, 60598 Frankfurt am Main (DE); UNGAR, Jürg, Dieter, 60598 Franfurt am Main (DE); UNGAR, Sybille, 83052 Bruckmuhl (DE)
(86) Internationale Anmeldenummer: PCT/EP2002/001609
(87) Internationale Veröffentlichungsnummer: WO 2002/079088

(56) Entgegenhaltungen:
- WO-A-86/06058
- DE-A- 1 442 643
- DE-A- 1 542 293
- DE-B- 1 217 934
- DE-C- 938 546
- GB-A- 1 425 271

## Beschreibung

Die Erfindung betrifft ein Verfahren zum Herstellen von Ammoniak aus einem Stickstoff und Wasserstoff enthaltenden Synthesegas an einem körnigen Katalysator in mindestens einem Reaktor bei Drücken im Bereich von 50 bis 300 bar und Temperaturen im Bereich von 100 bis 600 °C, wobei man aus dem Reaktor ein NH₃-Dampf enthaltendes Produktgemisch abzieht, kühlt und dabei Ammoniak auskondensiert und abtrennt, wobei ein Kreislaufgas entsteht, welchem man frisches Synthesegas zumischt und wobei man das Kreislaufgas als Synthesegas in den Reaktor zurückleitet.

Die deutsche Auslegeschrift DE1217934 vom 02.06.1966 beschreibt ein Verfahren zur Ammoniaksynthese. Die Vorwärmung des Synthesegases durch Wärmetausch erfolgt im zweiten Katalysatorbett. Die erste Katalysatorstufe ist ungekühlt, an die zweite Stufe anschliessend befindet sich ein drittes Katalysatorbett, welches von einem Hauptwärmetauscher gefolgt wird. Die Katalysatorbetten werden im Gegenstrom oder in einer Kombination von Gleichstrom und Gegenstrom durchströmt.

Der Erfindung liegt die Aufgabe zu Grunde, beim Durchströmen des Synthesegases durch mehrere Katalysatorbetten die Temperaturen so regeln zu können, dass das Produktgemisch eine möglichst hohe NH₃-Konzentration aufweist. Erfindungsgemäß gelingt dies dadurch, dass man unreagiertes Synthesegas, welches als Kühlgas gedient hat, durch ein erstes, von Kühlröhren freies Katalysatorbett und anschließend als teilreagiertes Synthesegas mit einem NH₃-Gehalt von 5 bis 20 Vol.-% als Heizfluid durch einen Wärmeaustauscher leitet, dass man teilreagiertes Synthesegas durch mindestens ein weiteres Katalysatorbett leitet, welches von Kühlröhren durchzogen ist, dass man unreagiertes Synthesegas als Kühlgas durch die Kühlröhren des weiteren Katalysatorbettes leitet und auf 300 bis 500 °C erhitztes Kühlgas in das erste Katalysatorbett leitet, und dass die Kühlröhren und das weitere Katalysatorbett im Gleichstrom durchströmt werden.

Bei diesem Verfahren ist es wichtig, dass das unreagierte Synthesegas zunächst durch ein erstes, von Kühlröhren freies Katalysatorbett strömt, wobei die NH₃-Bildung intensiv einsetzt und zu einer Temperaturerhöhung um üblicherweise 80 bis 200 °C führt. Im Wärmeaustauscher wird das teilreagierte Synthesegas wieder gekühlt, wobei sich die Temperatur-Erniedrigung regulieren lässt. Üblicherweise sinkt die Temperatur in diesem Wärmeaustauscher um 50 bis 150 °C. Im weiteren Katalysatorbett, welches Kühlröhren aufweist, setzt sich dann die Reaktion in kontrollierter Weise bis zum gewünschten Produktgemisch fort. Die Anzahl der weiteren Katalysatorbetten, welche mit Kühlröhren ausgestattet sind, liegt zumeist im Bereich von 1-4 Betten. In jedem dieser gekühlten Betten kann die Anzahl der Kühlröhren und damit die Intensität der Kühlung in gewünschter Weise gewählt werden. Dem Wärmeaustauscher kann man flüssiges, gasförmiges oder dampfförmiges Kühlmittel zuführen, z.B. verdampfendes Wasser oder auch unreagiertes Synthesegas. Das teilreagierte Synthesegas wird im Wärmeaustauscher üblicherweise um 30 bis 180 °C abgekühlt. Das erfindungsgemäße Verfahren ermöglicht es, in den gekühlten Katalysatorbetten ein Temperaturprofil zu erreichen, das der optimalen Temperaturkurve am nächsten kommt. Dadurch erreicht man im Produktgasgemisch sehr hohe NH₃-Konzentrationen.

Eine Variante des erfindungsgemäßen Verfahrens besteht darin, dass man das vom Wärmeaustauscher kommende Heizfluid aus dem Reaktor heraus und in einen separaten Röhrenreaktor leitet, in welchem der Katalysator in Röhren angeordnet ist, welche von einem im Kreislauf geführten Kühlfluid indirekt gekühlt werden. Aus dem Röhrenreaktor zieht man teilreagiertes Synthesegas mit einem NH₃-Gehalt von 15 bis 30 Vol.-% und Temperaturen von 250 bis 500 °C ab und leitet es anschließend durch ein oder mehrere Katalysatorbetten mit Kühlröhren. Üblicherweise wird der Druck an der Außenseite der Katalysator enthaltenden Röhren des Röhrenreaktors um 30 bis 290 bar niedriger sein als im Innern der Röhren. Es ist zweckmäßig, wenn man teilreagiertes Synthesegas mit einem NH₃-Gehalt von 5 bis 15 Vol.-% in den separaten Röhrenreaktor leitet, damit noch ein wesentlicher Teil der Reaktion in diesem separaten Röhrenreaktor ablaufen kann.

Eine vorteilhafte Ausgestaltung des Verfahrens besteht darin, dass teilreagiertes Synthesegas durch mindestens zwei weitere Katalysatorbetten geführt werden, welche mit Kühlröhren ausgestattet sind. Das vom letzten dieser Katalysatorbetten abgezogene Produktgemisch verlässt den Reaktor und wird außerhalb zum Kondensieren des Ammoniaks gekühlt. Das vom Wärmeaustauscher kommende Kühlgas führt man zweckmäßigerweise zunächst durch die Kühlröhren des letzten Katalysatorbettes und anschließend durch die Kühlröhren des vorletzten Katalysatorbettes. In diesem Fall bietet es sich an, im Wärmeaustauscher als Kühlmittel unreagiertes Synthesegas zu verwenden, welches anschließend zu den Kühlröhren eines Katalysatorbettes geführt wird.

Die Herstellung des Synthesegases, welches Wasserstoff und Stickstoff im molaren Verhältnis von etwa 3 : 1 enthält, ist bekannt und z.B. im EP-Patent 307 983 beschrieben. Die zu verwendenden Katalysatoren sind handelsüblich und enthalten als aktive Komponenten z.B. Fe und Oxide von K, Ca, Al (so z.B. der Katalysator FNMS von Montecatini-Edison).

Ausgestaltungsmöglichkeiten des Verfahrens werden mit Hilfe der Zeichnung erläutert. Es zeigt:
- Fig. 1: eine erste Variante eines Synthesereaktors im Längsschnitt in schematischer Darstellung,
- Fig. 2: einen Reaktor im Längsschnitt für eine zweite Verfahrensvariante und
- Fig. 3: ein Diagramm zum optimalen Reaktionsverlauf.

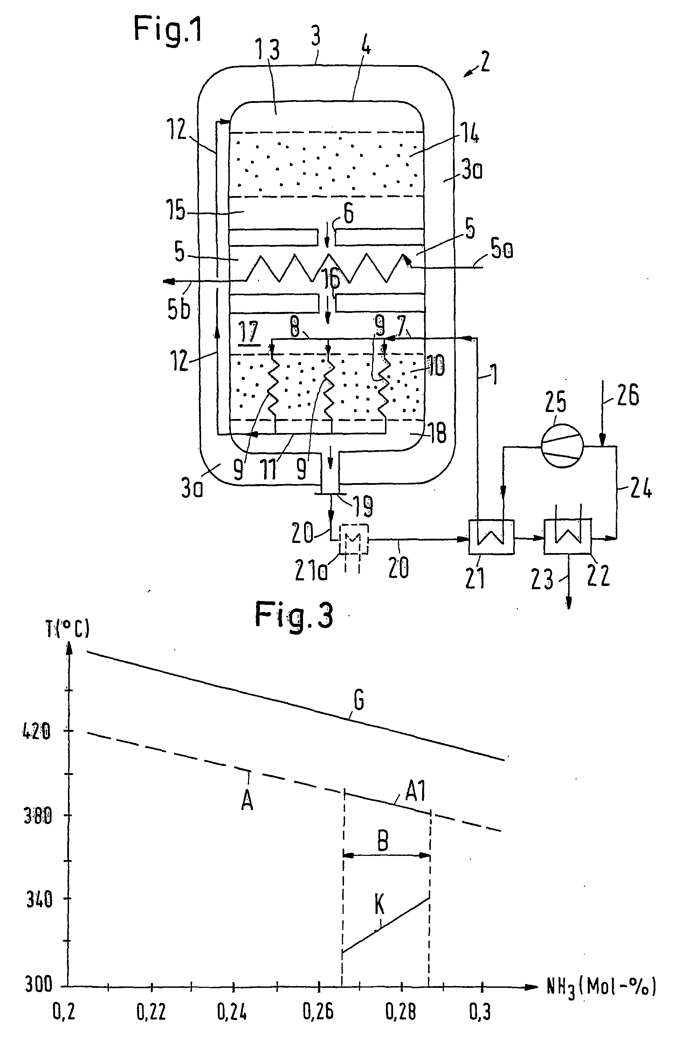

Beim Verfahren der Fig. 1 tritt das im Kreislauf geführte Synthesegas durch die Leitung (1) in den Reaktor (2) ein, welcher einen Außenmantel (3) und einen Innenmantel (4) aufweist. Das Synthesegas strömt zunächst durch die Leitung (7) zu einem Verteiler (8), der mit Kühlröhren (9) in Verbindung steht. Die Kühlröhren (9) befinden sich in einem Katalysatorbett (10) und sind an ihrem Auslassende mit einem Sammler (11) verbunden, durch welchen aufgeheiztes Synthesegas zu einer Leitung (12) und dann in den Verteilerraum (13) eines ersten Katalysatorbettes (14) strömt. Die Röhren (9) können gebogen, gewendet oder auch gerade ausgeführt sein.

Das unreagierte Synthesegas tritt von der Verteilkammer (13) in das erste Katalysatorbett (14) ein, wo die NH₃-Bildung intensiv einsetzt. In der zum ersten Katalysatorbett (14) gehörenden Auslasskammer (15) sammelt sich teilreagiertes Synthesegas mit einem NH₃-Gehalt von 5 bis 20 Vol.-% und strömt durch die Wandöffnung (6) in den Wärmeaustauscher (5), der frei von Katalysator ist. Dort wird das teilreagierte Synthesegas indirekt gekühlt, Kühlmittel wird in der Leitung (5a) zugeführt und strömt in der Leitung (5b) ab. Das gekühlte, teilreagierte Synthesegas gelangt dann durch eine weitere Wandöffnung (16) zunächst in eine Verteilkammer (17), die zum gekühlten Katalysatorbett (10) gehört. In diesem Katalysatorbett wird die Reaktion weiter fortgesetzt und es entsteht ein Produktgemisch, welches sich zunächst in der Auslasskammer (18) sammelt und dann den Reaktor (2) durch den Auslass (19) verlässt.

Das Produktgemisch strömt durch die Leitung (20) zu einem indirekten Kühler (21), dem ein gestrichelt angedeuteter Kühler (21a) vorgeschaltet sein kann, und wird dann in an sich bekannter Weise noch weiter mehrstufig gekühlt, wobei NH₃ kondensiert. Vereinfachend ist in der Zeichnung der Wärmeaustauscher (22) dargestellt, aus welchem man kondensiertes Ammoniak durch die Leitung (23) abzieht. Verbleibendes Kreislaufgas strömt durch die Leitung (24) zu einem Verdichter (25), wobei man frisches Synthesegas durch die Leitung (26) zumischt. Das Kreislaufgas wird im Kühler (21) aufgeheizt und durch die Leitung (1) zurück zum Reaktor (2) geführt.

Es ist möglich und an sich bekannt, unreagiertes Synthesegas und z.B. Kreislaufgas aus der Leitung (1) zunächst in den Zwischenraum (3a) zwischen dem Außenmantel (3) und dem Innenmantel (4) zu führen, um dort kühlend zu wirken und die Mäntel gegen Überhitzung zu schützen. Dieses unreagierte Synthesegas wird dann z.B. zunächst in die Kühlröhren (9) des gekühlten Katalysatorbettes (10) geführt, wo es als Kühlgas wirkt.

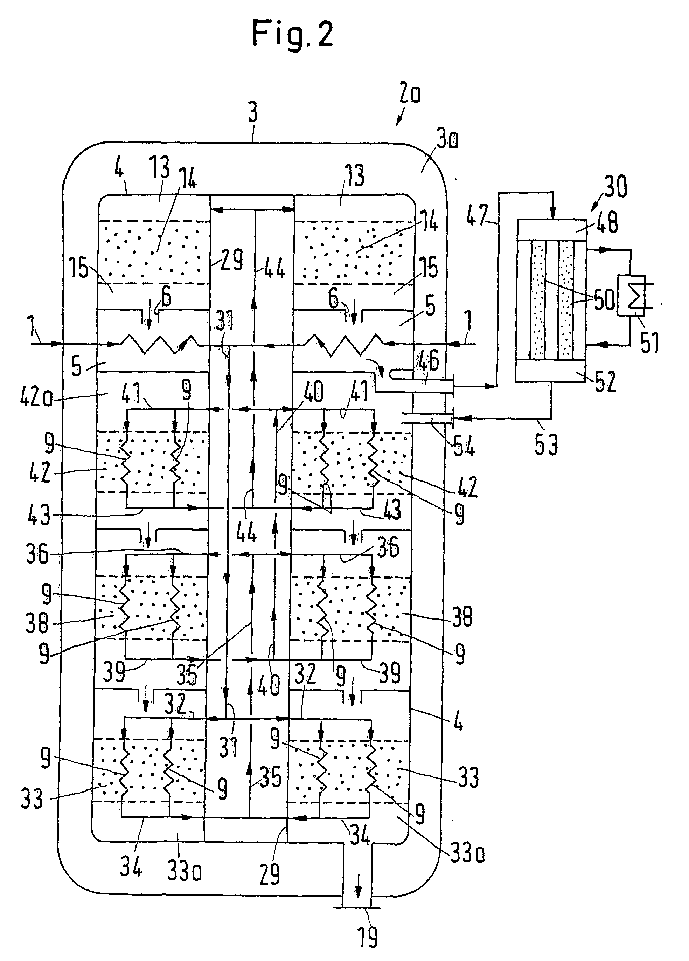

Für die Verfahrensvariante der Fig. 2 ist der Reaktor (2a) vorgesehen, mit welchem ein separater Röhrenreaktor (30) verbunden ist. Das im Kreislauf geführte Synthesegas tritt durch die Leitungen (1) zunächst in den Wärmeaustauscher (5) ein und nimmt Wärme vom teilreagierten Synthesegas auf, welches durch die Wandöffnungen (6) in den Wärmeaustauscher (5) eintritt. Das teilweise erwärmte Kühlgas strömt durch die Leitung (31) aus dem Wärmeaustauscher (5) ab und gelangt zu einem Verteiler (32), dessen Kühlröhren (9) im letzten Katalysatorbett (33) angeordnet sind. Die Leitung (31) befindet sich in einem vertikalen, zentralen Rohr (29), dessen Innenbereich frei von Katalysator ist.

Die Kühlröhren (9) des letzten Katalysatorbettes (33) münden in einen Sammler (34), welcher mit einer Ableitung (35) verbunden ist, die zu einem Verteiler (36) führt. Die mit den Verteiler (36) verbundenen Kühlröhren (9) befinden sich in einem weiteren Katalysatorbett (38) und das Kühlgas strömt von den Röhren (9) zu einem weiteren Sammler (39) und dann durch eine Ableitung (40) zu einem dritten Verteiler (41), der zu einem weiteren Katalysatorbett (42) gehört. Die vom Verteiler (41) ausgehenden Kühlröhren (9) münden in einen Sammler (43), der mit der Ableitung (44) verbunden ist, welche das aufgeheizte, unreagierte Synthesegas zur Verteilkammer (13) des ersten Katalysatorbettes (14) führt. Dieses erste Katalysatorbett (14) ist frei von Kühlröhren. Teilreagiertes Synthesegas gelangt zunächst in die Sammelkammer (15) und wird dann in Gas-Gas-Wärmeaustauscher (5) gekühlt. Von hier strömt das teilreagierte Synthesegas, welches einen NH₃-Gehalt von 5 bis 15 Vol.-% aufweist, zunächst durch den Auslass (46) und dann durch die Leitung (47) zum separaten Röhrenreaktor (30), in welchem der körnige Katalysator in Röhren (50) angeordnet ist. Von einer Verteilkammer (48) gelangt das teilreagierte Synthesegas in diese Röhren (50), die von einem Kühlmedium umgeben sind. Das Kühlmedium wird in an sich bekannter Weise in Kreislauf durch einen äußeren Kühler (51) geführt. Es kann sich bei dem Kühlmedium z.B. um Diphenyl oder auch um eine Salzschmelze handeln.

Synthesegas mit einem NH₃-Gehalt von 15 bis 30 Vol.-% und Temperaturen von 250 bis 500 °C verlässt die mit Katalysator gefüllten Röhren (50), gelangt zunächst in eine Sammelkammer (52) und strömt dann durch die Leitung (53) zu einem Einlassstutzen (54) und dann in die Verteilkammer (42a), die zum Katalysatorbett (42) gehört.

Zur weiteren Reaktion strömt das teilreagierte Synthesegas in der Zeichnung abwärts zunächst durch das gekühlte Katalysatorbett (42) dann durch das ebenfalls gekühlte Katalysatorbett (38) und schließlich durch das gekühlte Katalysatorbett (33) zu einer Auslasskammer (33a) und dann als Produktgemisch zum Reaktorauslass (19). Die weitere Behandlung des Produktgemisches, insbesondere seine Kühlung, die NH₃-Abtrennung, die Zufuhr von frischem Synthesegas und die Rückführung zur Leitung (1) ist die gleiche wie zusammen mit Fig. 1 beschrieben.

Beim Verfahren der Fig. 2 ist es ein beachtlicher Aspekt, dass das in den Kühlröhren (9) strömende Kühlgas mit relativ niedriger Temperatur zunächst kühlend im letzten Katalysatorbett (33) genutzt wird, bevor es als Kühlgas anschließend durch das zweitletzte Katalysatorbett (38) geführt wird.

Fig. 3 zeigt im Diagramm den Zusammenhang von Reaktionstemperatur T und NH₃-Anteil (in Mol.-%) im Synthesegas. Die Linie (G) gibt den Gleichgewichtszustand an, die Linie (A) die für die Reaktionsgeschwindigkeit optimale Temperatur. Im Abschnitt B liegt die zum nachfolgenden Beispiel gehörende Betriebsweise des Bettes (38), der Temperaturverlauf ist durch die Linie (A1) gegeben, (K) ist die zugehörige Kühlmitteltemperatur. Im Beispiel liegen die Temperaturen im Röhrenreaktor (30) sowie auch in den Betten (42) und (33) annähernd auf der optimalen Temperaturkurve.

### Beispiel:

Das Beispiel bezieht sich auf eine Verfahrensführung gemäß Fig. 2, wobei pro Tag 1000 t Ammoniak hergestellt werden. Da das Synthesegas aus einer Wäsche mit flüssigem Stickstoff kommt, enthält es praktisch weder CH₄ noch Argon.

Die Daten für Mengen, Drücke, Temperaturen und Zusammensetzungen, die teilweise berechnet sind, ergeben sich aus der folgenden Tabelle. Der Katalysator ist vom oben erwähnten Typ FNMS.

| Bezugsziffer | 1 | 44 | 6 | 47 | 53 | 42 | 38 | 19 |
|---|---|---|---|---|---|---|---|---|
| Temperatur (°C) | 241 | 358 | 506 | 450 | 395 | 387 | 379 | 373 |
| Druck (bar) | 145 | 143 | 142,9 | 142,4 | 141,9 | 140,8 | 140 | 139,6 |
| Menge (kmol/h) | 11578 | 11578 | 10624 | 10624 | 9472 | 9343 | 9232 | 9132 |
| Zusammensetzung | | | | | | | | |
| N₂ (Vol.-%) | 24,5 | 24,5 | 22,2 | 22,2 | 18,8 | 18,4 | 18,0 | 17,6 |
| H₂ (Vol.-%) | 73,4 | 73,4 | 66,5 | 6,5 | 56,4 | 55,0 | 53,9 | 52,9 |
| NH₃ (Vol.-%) | 2,1 | 2,1 | 11,3 | 11,3 | 24,8 | 26,6 | 28,1 | 29,5 |

Die Daten zu den Betten (38) und (42) gehören jeweils zum Austritt aus dem Bett. Durch die optimale Temperaturführung wird in diesem Beispiel am Reaktoraustritt (19) die sehr hohe NH₃-Konzentration von 29,5 Vol.-% erreicht.

## Patentansprüche

1. Verfahren zum Herstellen von Ammoniak aus einem Stickstoff und Wasserstoff enthaltenden Synthesegas an einem körnigen Katalysator in mindestens einem Reaktor bei Drücken im Bereich von 50 bis 300 bar und Temperaturen im Bereich von 100 bis 600 °C, wobei man aus dem Reaktor ein NH₃-Dampf enthaltendes Produktgemisch abzieht, kühlt und dabei Ammoniak auskondensiert und abtrennt, wobei ein Kreislaufgas entsteht, welchem man frisches Synthesegas zumischt und wobei man das Kreislaufgas als Synthesegas in den Reaktor zurückleitet, dass man unreagiertes Synthesegas durch ein erstes, von Kühlröhren freies Katalysatorbett und anschließend als teilreagiertes Synthesegas mit einem NH₃-Gehalt von 5 bis 20 Vol.-% als Heizfluid durch einen Wärmeaustauscher leitet,
**dadurch gekennzeichnet, dass** man teilreagiertes Synthesegas durch mindestens zwei weitere Katalysatorbetten leitet, welche von Kühlröhren durchzogen sind, dass man unreagiertes Synthesegas als Kühlgas durch die Kühlröhren der weiteren Katalysatorbetten leitet und auf 300 bis 500 °C erhitztes Kühlgas in das erste Katalysatorbett leitet, dass die Kühlröhren und die weiteren Katalysatorbetten im Gleichstrom durchströmt werden und dass man das Kühlgas zunächst durch die Kühlröhren des letzten Katalysatorbettes und anschießend durch die Kühlröhren des vorletzten Katalysatorbettes leitet.

2. Verfahren nach Anspruch 1, **dadurch gekennzeichnet, dass** man das vom Wärmeaustauscher kommende Heizfluid aus dem Reaktor heraus und in einen separaten Röhrenreaktor leitet, in welchem der Katalysator in Röhren angeordnet ist, welche von einem im Kreislauf geführten Kühlfluid gekühlt werden, dass man aus dem Röhrenreaktor teilreagiertes Synthesegas mit einem NH₃-Gehalt von 15 bis 30 Vol.-% und Temperaturen von 250 bis 500 °C abzieht und durch ein Katalysatorbett mit Kühlröhren leitet.

3. Verfahren nach Anspruch 2, **dadurch gekennzeichnet, dass** der Druck an der Außenseite der Katalysator enthaltenden Röhren des Röhrenreaktors um 30 bis 290 bar niedriger ist als im Innern der Röhren.

4. Verfahren nach Anspruch 1 oder einem der folgenden, **dadurch gekennzeichnet, dass** man im Wärmeaustauscher, in welchem das teilreagierte Synthesegas als Heizfluid dient, unreagiertes Synthesegas als Kühlmittel hindurchleitet und es dann in die Kühlröhren eines Katalysatorbettes leitet.

5. Verfahren nach einem der Ansprüche 2 bis 4, **dadurch gekennzeichnet, dass** man teilreagiertes Synthesegas mit einem NH₃-Gehalt von 5 bis 15 Vol.-% in den separaten Röhrenreaktor leitet.

## Claims

1. A process of producing ammonia from a synthesis gas containing nitrogen and hydrogen on a granular catalyst in at least one reactor at pressures in the range from 50 to 300 bar and temperatures in the range from 100 to 600°C, wherein a product mixture containing NH₃ vapour is withdrawn from the reactor, is cooled and in so doing ammonia is condensed out and separated, with a recycle gas being obtained, to which fresh synthesis gas is admixed, and the recycle gas being recirculated to the reactor as synthesis gas, unreacted synthesis gas is passed through a first catalyst bed free of cooling tubes and subsequently as partly reacted synthesis gas with an NH₃ content of 5 to 20 vol-% as heating fluid through a heat exchanger,
**characterised in that** partly reacted synthesis gas is passed through at least two further catalyst beds through which extend cooling tubes, unreacted synthesis gas is passed as cooling gas through the cooling tubes of the further catalyst beds, and cooling gas heated to 300 to 500°C is introduced into the first catalyst bed, and that the gas flows through the cooling tubes and the further catalyst beds in a cocurrent flow, and that the cooling gas is first passed through the cooling tubes of the last catalyst bed and then through the cooling tubes of the penultimate catalyst bed.

2. A process according to claim 1, **characterised in that** the heating fluid coming from the heat exchanger is discharged from the reactor and introduced into a separate tubular reactor, in which the catalyst is arranged in tubes which are cooled by a circulating cooling fluid, that partly reacted synthesis gas with an NH₃ content of 15 to 30-% and temperatures of 250 to 500°C is withdrawn from the tubular reactor and passed through a catalyst bed with cooling tubes.

3. A process according to claim 2, **characterised in that** the pressure on the outside of the catalyst-containing tubes of the tubular reactor is lower than inside the tubes by 30 to 290 bar.

4. A process according to claim 1 or one of the following claims, **characterised in that** in the heat exchanger, in which the partly reacted synthesis gas serves as heating fluid, unreacted synthesis gas is passed through as cooling medium and is then introduced into the cooling tubes of a catalyst bed.

5. A process according to one of claims 2 to 4, **characterised in that** partly reacted synthesis gas with an NH₃ content of 5 to 15 vol-% is introduced into the separate tubular reactor.

## Revendications

1. Procédé de production d'ammoniac à partir d'un gaz de synthèse comprenant de l'azote et de l'hydrogène sur un catalyseur en grains dans au moins un réacteur sous des pressions de l'ordre de 50 à 300 bar et à des températures de l'ordre de 100 à 600°C, qui consiste à soutirer du réacteur un mélange de produits contenant de la vapeur de NH₃ et à en condenser et séparer de l'ammoniac, avec formation d'un gaz de circuit auquel on ajoute du gaz de synthèse frais et que l'on retourne comme gaz de synthèse au réacteur, à envoyer du gaz de synthèse inaltéré dans un premier lit de catalyseur sans tube de refroidissement et ensuite sous la forme de gaz de synthèse, ayant réagi partiellement et ayant une teneur en NH₃ de 5 à 20% en volume, comme fluide de chauffage dans un échangeur de chaleur,
**caractérisé en ce que** l'on envoie du gaz de synthèse ayant réagi partiellement dans au moins deux autres lits de catalyseur qui sont traversés par des tubes de refroidissement **en ce que** l'on fait passer du gaz de synthèse inaltéré en tant que gaz de refroidissement dans les tubes de refroidissement des autres lits de catalyseur et on envoie dans le premier lit de catalyseur du gaz de refroidissement chauffé entre 300 et 500°C, **en ce que** l'on fait parcourir les tubes de refroidissement et les autres lits de catalyseur en courant de même sens et **en ce que** l'on fait passer le gaz de refroidissement d'abord dans les tubes de refroidissement du dernier lit de catalyseur et ensuite dans les tubes de refroidissement de l'avant dernier lit de catalyseur.

2. Procédé suivant la revendication 1, **caractérisé en ce que** l'on fait sortir du réacteur du fluide de chauffage arrivant de l'échangeur de chaleur et on l'envoie dans un réacteur tubulaire distinct dans lequel le catalyseur est placé dans des tubes qui sont refroidis par un fluide de refroidissement circulant en circuit fermé, **en ce que** l'on soutire du réacteur tubulaire du gaz de synthèse ayant réagi partiellement et ayant une teneur en NH₃ de 15 à 30% en volume et des températures 250 à 500 °C, et on l'envoie dans un lit de catalyseur ayant des tubes de refroidissement.

3. Procédé suivant la revendication 2, **caractérisé en ce** la pression du côté de la sortie des tubes, contenant du catalyseur, du réacteur tubulaire et plus basse de 30 à 290 bar qu'à l'intérieur des tubes.

4. Procédé suivant la revendication 1 ou l'une des suivantes, **caractérisé en ce que** l'on fait passer dans l'échangeur de chaleur, dans lequel le gaz de synthèse ayant réagi partiellement sert de fluide de chauffage, du gaz de synthèse inaltéré en tant que fluide de refroidissement, et on l'envoie alors dans les tubes de refroidissement d'un lit de catalyseur.

5. Procédé suivant l'une des revendications 2 à 4, **caractérisé en** l'on envoie du gaz de synthèse, ayant réagi partiellement et ayant une teneur en NH₃ de 5 à 15% en volume, dans le réacteur tubulaire distinct.
